# EUROPEAN PATENT SPECIFICATION

(11) **EP 2 385 965 B1**
(45) Date of publication and mention of the grant of the patent: **08.08.2018**
(21) Application number: 10700270.1
(22) Date of filing: 04.01.2010
(51) Int. Cl.: C08K 3/22, H01B 3/30

(54) **FLAME RETARDANT MATERIAL AND A CABLE HAVING A CABLE SHEATH COMPOSED OF THE SAME**
FLAMMWIDRIGES MATERIAL UND KABEL MIT EINER DARAUS BESTEHENDEN KABELHÜLLE
MATÉRIAU IGNIFUGE ET CÂBLE COMPORTANT UNE GAINE DE CÂBLE COMPOSÉE DE CELUI-CI

(30) Priority: 07.01.2009 GB 0900092
(43) Date of publication of application: 16.11.2011
(73) Proprietor: Tyco Electronics UK Ltd, Wiltshire SN3 5HH (GB)
(72) Inventor: PAGLIUCA, Antonio, Witney Oxfordshire OX28 2EQ (GB)
(74) Representative: Bankes, Stephen Charles Digby
(86) International application number: PCT/GB2010/050002
(87) International publication number: WO 2010/079348

(56) References cited:
- EP-A- 1 411 079
- DE-A1- 2 853 827

## Description

This invention relates to a flame retardant material and a cable sheath comprising the same.

Use of high purity, fine precipitated Aluminium Trihydroxide Al(OH)₃ as a flame retardant filler for cable sheaths is known. Furthermore, such fillers are commercially available including those sold as Martinal® OL-111/LE, OL-107/LE, OL-104/LE, OL-104/A and OL-107/A from Albemarle Corporation®. Of those mentioned above, OL-104/A and OL-107/A are vinyl-silane treated.

In accordance with the present invention, there is provided a flame retardant material comprising :
- a polymer; and
- at least two high purity, fine precipitated Aℓ(OH)₃ flame retardant fillers,
characterised by a first Aℓ(OH)₃ filler subjected to a vinyl silane treatment, and a second Aℓ(OH)₃ filler not being subjected to vinyl silane treatment, wherein the ratio of the first to the second Aℓ(OH)₃ filler is between 1:1.27 and 1:1.67 and wherein the specific surface area of the second Aℓ(OH)₃ filler is at least 130% that of the first Aℓ(OH)₃ filler.

For example, a first Aℓ(OH)₃ filler having, in isolation, a specific surface area of 4 to 8 m²/g, and a second Aℓ(OH)₃ filler having, in isolation, a specific surface area of 8 to 14 m²/g (ideally between 10 to 12 m²/g).

Without wishing to be bound by any theory, it is believed that the higher the specific surface area of a filler, then the greater chance of physical interaction with polymer chains (and vice versa) which will result in positive dispersion and good physical properties. However, for a very high specific surface area - as needed for good resistance to burning - physical interaction with polymer chains becomes too strong, reducing the elasticity and cold bending performance. The inventor has realised that by using a material comprising a combination of fillers with different specific surface areas, an unexpected synergy occurs whereby a good level of resistance to burning is maintained (e.g., compliance with UL VW-1 flammability testing) whilst furthermore maintaining good physical properties (e.g. strength greater than 10Mpa, elongation approaching 200% and class leading cold bending performance).

The second Aℓ(OH)₃ filler may, in isolation, have a specific surface area of at least 150% that of the first Aℓ(OH)₃ filler. Furthermore, the first Aℓ(OH)₃ filler is subjected to a vinyl-silane treatment while the second Aℓ(OH)₃ filler is not so subjected. These measures appear to enhance the aforementioned synergy.

The ratio of the first to second Aℓ(OH)₃ filler is preferably between 1:1.37 and 1:1.57; and ideally 1:1.47.

The combined content of the first and second Aℓ(OH)₃ fillers in the material is preferably between 50% and 70%; more preferably between 55% and 65%; and ideally 60%.

The first Aℓ(OH)₃ filler will preferably be Martinal 107A mentioned above.

The second Aℓ(OH)₃ filler will preferably be Martinal 111LE mentioned above.

An embodiment of the present invention will now be described, with reference to the accompanying drawings, by way of example only.

In accordance with the present invention, there is provided a cable comprising a cable sheath having a flame retardant material comprising 30% low density polyethylene co-polymer, 24% vinyl-silane treated Martinal OL-107A and 36% untreated Martinal OL-111/LE. Conventional additives such as anti-oxidants and colourants make up the remainder.

Such a material may be manufactured by heating granulated polymer to between 120 and 140 °C, and thereafter mixing the masticated polymer with first Martinal OL-107A and secondly Martinal OL-111/LE using an intermixer (conventionally available mixing apparatus).

## Claims

1. A flame retardant material comprising:
- a polymer; and
- at least two high purity, fine precipitated Aℓ(OH)₃ flame retardant fillers, **characterised by** a first Aℓ(OH)₃ filler subjected to a vinyl silane treatment, and a second Aℓ(OH)₃ filler not being subjected to vinyl silane treatment, wherein the ratio of the first to the second Aℓ(OH)₃ filler is between 1:1.27 and 1:1.67 and wherein the specific surface area of the second Aℓ(OH)₃ filler is at least 130% that of the first Aℓ(OH)₃ filler.

2. A material according to any preceding claim wherein the second Aℓ(OH)₃ filler has, in isolation, a specific surface area of at least 150% that of the first Aℓ(OH)₃ filler.

3. A material according to any preceding claim wherein the ratio of the first to second Aℓ(OH)₃ filler is between 1:1.37 and 1:1.57, preferably 1:1.47.

4. A material according to any preceding claim wherein the combined content of the first and second Aℓ(OH)₃ fillers in the material is between 50% and 70%.

5. A material according to claim 4 wherein the combined content of the first and second Aℓ(OH)₃ fillers in the material is between 55% and 65%, preferably 60%.

6. A material according to any preceding claim wherein the polymer is a low density polyethylene co-polymer or a blend thereof.

7. A cable having a cable sheath composed of flame retardant material according to any of the preceding claims.

## Patentansprüche

1. Flammwidriges Material, das Folgendes umfasst:
- ein Polymer; und
- wenigstens zwei feinstgefällte Aℓ(OH)₃ flammwidrige Füllstoffe von hoher Reinheit, **gekennzeichnet durch** einen ersten Aℓ(OH)₃ Füllstoff, der einer Vinylsilanbehandlung unterzogen wird, und einen zweiten Aℓ(OH)₃ Füllstoff, der keiner Vinylsilanbehandlung unterzogen wird, wobei das Verhältnis zwischen erstem und zweitem Aℓ(OH)₃ Füllstoff zwischen 1:1,27 und 1:1,67 liegt und wobei die spezifische Oberfläche des zweiten Aℓ(OH)₃ Füllstoffs wenigstens 130 % von der des ersten Aℓ(OH)₃ Füllstoffs beträgt.

2. Material nach dem vorherigen Anspruch, wobei der zweite Aℓ(OH)₃ Füllstoff in Isolation eine spezifische Oberfläche von wenigstens 150 % von der des ersten Aℓ(OH)₃ Füllstoffs hat.

3. Material nach einem vorherigen Anspruch, wobei das Verhältnis zwischen erstem und zweitem Aℓ(OH)₃ Füllstoff zwischen 1:1,37 und 1:1,57 liegt und vorzugsweise 1:1,47 beträgt.

4. Material nach einem vorherigen Anspruch, wobei der kombinierte Inhalt des ersten und zweiten Aℓ(OH)₃ Füllstoffs in dem Material zwischen 50 % und 70 % liegt.

5. Material nach Anspruch 4, wobei der kombinierte Inhalt des ersten und zweiten Aℓ(OH)₃ Füllstoffs in dem Material zwischen 55 % und 65 % liegt, vorzugsweise 60 % beträgt.

6. Material nach einem vorherigen Anspruch, wobei das Polymer ein Polyethylen-Copolymer von niedriger Dichte oder eine Mischung davon ist.

7. Kabel mit einer Kabelummantelung bestehend aus einem flammwidrigen Material nach einem der vorherigen Ansprüche.

## Revendications

1. Matériau ignifuge comprenant :
- un polymère ; et
- au moins deux charges ignifuges d'A*l*(OH)₃ de haute pureté finement précipité, **caractérisé par** une première charge d'A*l*(OH)₃ soumise à un traitement au vinyle silane, et une seconde charge d'A*l*(OH)₃ non soumise à un traitement au vinyle silane, dans lequel le rapport entre la première charge d'A*l*(OH)₃ et la seconde charge d'A*l*(OH)₃ est compris entre 1:1,27 et 1:1,67 et dans lequel la surface spécifique de la seconde charge d'A*l*(OH)₃ est au moins 130 % de la surface spécifique de la première charge d'A*l*(OH)₃.

2. Matériau selon n'importe quelle revendication précédente, dans lequel la seconde charge d'A*l*(OH)₃ a, isolément, une surface spécifique d'au moins 150 % de la surface spécifique de la première charge d'A*l*(OH)₃.

3. Matériau selon n'importe quelle revendication précédente, dans lequel le rapport entre la première charge d'A*l*(OH)₃ et la seconde charge d'A*l*(OH)₃ est compris entre 1:1,37 et 1:1,57, de préférence 1:1,47.

4. Matériau selon n'importe quelle revendication précédente, dans lequel le contenu combiné des première et seconde charges d'A*l*(OH)₃ dans le matériau est compris entre 50 % et 70 %.

5. Matériau selon la revendication 4, dans lequel le contenu combiné des première et seconde charges d'A*l*(OH)₃ dans le matériau est compris entre 55 % et 65 %, de préférence 60 %.

6. Matériau selon n'importe quelle revendication précédente, dans lequel le polymère est un copolymère de polyéthylène de faible densité ou un mélange de celui-ci.

7. Câble comportant une gaine de câble composée d'un matériau ignifuge selon l'une quelconque des revendications précédentes.
